# EUROPÄISCHE PATENTSCHRIFT

(11) **EP 0 979 411 B1**
(45) Veröffentlichungstag und Bekanntmachung des Hinweises auf die Patenterteilung: **06.10.2004**
(21) Anmeldenummer: 98921431.7
(22) Anmeldetag: 06.04.1998
(51) Int. Cl.: G01P 3/489, G01P 3/44

(54) **ANORDNUNG ZUR DREHZAHLERFASSUNG**
SYSTEM FOR DETECTING ROTATING SPEED
SYSTEME DE DETECTION DE VITESSE DE ROTATION

(30) Priorität: 30.04.1997 DE 19718141
(43) Veröffentlichungstag der Anmeldung: 16.02.2000
(73) Patentinhaber: Continental Teves AG & Co. OHG, 60488 Frankfurt am Main (DE)
(72) Erfinder: LOHBERG, Peter, D-61381 Friedrichsdorf (DE); LORECK, Heinz, D-65510 Idstein (DE); FEY, Wolfgang, D-65527 Niedernhausen (DE)
(86) Internationale Anmeldenummer: PCT/EP1998/001983
(87) Internationale Veröffentlichungsnummer: WO 1998/049564

(56) Entgegenhaltungen:
- DE-A- 4 133 837
- DE-A- 4 434 978
- DE-A- 19 618 867
- DE-A- 19 634 715
- US-A- 4 086 532
- US-A- 4 721 895
- PATENT ABSTRACTS OF JAPAN vol. 013, no. 280 (E-779), 27. Juni 1989 & JP 01 065921 A (NEC CORP), 13. März 1989

## Beschreibung

Die Erfindung bezieht sich auf eine Anordnung der im Oberbegriff des Anspruches 1 genannten Art.

Eine solche Anordnung ist bereits aus der DE 196 18 867 A1 bekannt. In dieser Schrift wird ein System zur Veränderung eines Drehzahlsignals beschrieben, bei welchem dem Ausgangssignal, das in Form eines binären Strom- oder Spannungssignals vorliegt, Informationen über die Drehrichtung, über den Luftspalt, über den Bremsbelagverschleiß etc. überlagert sind.

Weiterhin ist aus der DE 44 34 978 A1 ein aktiver Bewegungssensor mit einer Auswerteschaltung bekannt. Bei dieser Schaltung ist zum Testen der "Luftspaltreserve", die zum Ausgleich von dynamischen Luftspaltänderungen oder Luftspalttoleranzen benötigt wird, ein Testmodus vorgesehen, bei dem eine zweite Hystereseschwelle das Umschalten der Drehzahlsignale beim Flankenwechseldes Sensorsignals bestimmt. Die Umschaltung auf die zum Testen vorhandene Hystereseschwelle geschieht z.B. durch Veränderung der Betriebsspannung des Sensors. Es ist auch vorgesehen, beim Erreichen einer bestimmten Geschwindigkeit des Fahrzeugrades in den Normalmodus zurückzuschalten.

Aus der japanischen Patentanmeldung JP-A-1065921 ist es bekannt, zwei Signalverstärkerkreise parallelzuschalten, von denen ein Kreis ein relativ niedriges Frequenzband und das parallele ein höheres Frequenzband verarbeiten. Das der hohen Eingangsfrequenz entsprechende und das der niedrigen Eingangsfrequenz entsprechende Signal werden nach Verstärkung überlagert, um eine gewünschte Frequenzcharakteristik der Verstärkerschaltung zu erreichen.

Gegenstand der vorliegenden Erfindung ist eine sensorische Anordnung zur Erfassung von Drehzahlen, Positionen, Ortsverschiebungen und Bewegungsgeschwindigkeiten im Bereich des Maschinenbaus, insbesondere jedoch in der Kfz-Industrie, hierbei vorwiegend im Anwendungsbereich geregelter Bremsen, bei Stellungsgebern, Winkelpositionsgebern, motorischen Verstelleinrichtungen oder zur Erfassung von Raddrehzahlen. Zu diesem Zweck sind bereits verschiedene sensorische Anordnungen bekannt. Sie bestehen in der Regel aus einem Signalgeber oder Impulsgeber, der mechanisch mit dem bewegten Maschinenteil verbunden ist, und einem Sensor oder Meßwertaufnehmer, der diesen Impulsgeber abtastet. Die Erfindung ist für Anordnungen einsetzbar, bei denen diese Abtastung über Licht, Hochfrequenz, elektrische oder magnetische Felder, insbesondere mit Hilfe von permanentmagnetischen Feldern geschieht. Als Impulsgeber sind Lochscheiben, Zahnräder und magnetisierte Strukturen bekannt. Als sensorische Effekte werden in Verbindung mit der vorliegenden Erfindung insbesondere der magnetoresistive Effekt (MR-Elemente) oder der Halleffekt (Hall-Elemente) genutzt.

In der nachvorveröffentlichten DE 196 34 715 A1 wird eine Anordnung zur Erfassung des Drehverhaltens eines rotierenden Encoders beschrieben, die ein Sensormodul mit einem Sensorelement, eine steuerbare Stromquelle, die einen das Drehverhalten darstellenden eingeprägten Strom liefert, und einen Modulator aufweist, der in Abhängigkeit von Signalen des Sensorelementes die Stromquelle steuert. Das Sensormodul ist magnetisch mit dem Encoder gekoppelt. Das Ausgangssignal ist ein das Drehverhalten darstellendes Signal mit überlagerten Status und/oder Zusatzsignalen.

Es sind Sensormodule bekannt, die eine unbegrenzt niedrige Drehzahl auflösen können, und solche, die eine nach unten begrenzte Drehzahl auflösen können. Sensormodule mit dem Vorteil unbegrenzt niedriger Drehzahlauflösung arbeiten mit gleichstromgekoppelten Verstärkern und einer festeingestellten, durch den störenden Gleichstromanteil des Signals begrenzten Verstärkung, die die an sich mögliche sensorische Reichweite zum Encoder (Luftspalt) einschränkt. Das ist ein gewisser Nachteil.

Sensormodule für nach unten begrenzte Drehzahlen arbeiten ebenfalls mit gleichstromgekoppelten Verstärkern, jedoch wird der dem Nutzsignal überlagerte störende Gleichstromanteil durch Subtraktion eines gleichgroßen Wertes kompensiert, so daß das Nutzsignal höher verstärkt werden kann.

Das ist vorteilhaft. Zu diesem Zweck wird aus dem Signal fortlaufend der driftende Signalgleichstromanteil durch eine Tiefpaßfunktion niedriger Grenzfrequenz extrahiert und dem Signal gegengekoppelt, so daß am Ausgang ein Hochpaßverhalten entsteht, das die untere sensierbare Drehzahl begrenzt. Dies ist ein Nachteil, wenn bei Bremsanwendungen möglichst aus dem Stillstand heraus reagiert werden soll, oder wenn der Stillstand zu Kalibrierzwecken bekannt sein muß.

Der Erfindung liegt die Aufgabe zugrunde, eine Anordnung zur Drehzahlerfassung oder Drehzahlmessung zu schaffen, die über den weiten Drehzahl- bzw. Frequenzbereich, der beispielsweise bei einem Kraftfahrzeug-Regelungssystem (ABS, ASR, ESP etc.) erfaßt werden muß, und auch unter ungünstigen Bedingungen, wie hohen Luftspalttoleranzen und dynamischen Luftspalt-Änderungen, genaue, zuverlässige und störsichere Meßergebnisse liefert.

Es hat sich gezeigt, daß diese Aufgabe durch eine Anordnung mit dem Merkmalen des Anspruchs 1 gelöst werden kann.

Ein spezielles Ausführungsbeispiel einer Anordnung nach der Erfindung besteht darin, daß nach dem Einschalten der Zündung des Antriebsmotors das Steuernetzwerk selbsttätig zuerst ein erstes Signalaufbereitungsnetzwerk zwischen Sensorelement und Modulator einschaltet und daß nach dem Überschreiten einer vorgegebenen Drehzahl von z.B. 10 km/h ein Wechsel auf ein zweites Signalaufbereitungsnetzwerk erfolgt, das dann bis zur Ausschaltung der Zündung des Antriebsmotors die Signalaufbereitung bestimmt.

Es kann auch vorteilhaft sein, wenn nach dem Einschalten der Zündung des Antriebsmotors das Steuernetzwerk selbsttätig zuerst ein erstes Signalaufbereitungsnetzwerk zwischen dem Sensorelement und dem Modulator einschaltet und nach dem Überschreiten einer vorgegebenen Drehzahl auf ein zweites Signalaufbereitungsnetzwerk umschaltet, wobei beim Unterschreiten einer weiteren vorgegebenen Drehzahl wiederum das erste Signalaufbereitungsnetzwerk eingeschaltet und dieser Wechsel drehzahlabhängig weitergeführt wird, bis die Zündung des Antriebsmotors ausgeschaltet wird.

Schließlich ist es erfindungsgemäß noch vorgesehen, die Auswertung der Amplitude der vorverstärkten Signalspannung des Sensorelementes in den Signalpfaden der Signalaufbereitungsnetzwerke über jeweils zwei unterschiedliche Hystereseschwellen vorzunehmen, wobei bei eingeschaltetem ersten Signalaufbereitungsnetzwerk das gleichzeitige Überschreiten beider Hystereseschwellen als Gütekriterium für einen korrekten Sensoreinbau gewertet wird und wobei das Unterschreiten einer Hystereseschwelle bei eingefügtem zweiten Signalaufbereitungsnetzwerk als zusätzliche, von dem Sensor abgeleitete Information zur Kennzeichnung des Erreichens eines dynamischen oder thermisch bedingten Grenzzustandes, mit dem die Regelung eines elektronischen Bremsensystems oder anderer elektronisch beeinflußbarer Aggregate, z.B. einer Motorsteuerung, verändert werden kann, ausgewertet wird.

Die vorliegende Erfindung erweitert die Palette der bisher bekannten Sensormodule um eine Anordnung mit neuartigem Systemverhalten, das insbesondere bei der Anwendung im Bereich der Raddrehzahlerfassung für ABS-Anwendungen (ASR, ASMS usw.) von Nutzen ist. Bei der Auslegung und Absicherung des Luftspaltes einer Drehzahlsensorik muß neben den statischen Toleranzen die dynamische Verformung der Achsteile einbezogen werden, die bei höheren Geschwindigkeiten und engen Kurvenfahrten auftritt und den Luftspalt erheblich vergrößern kann. Moderne aktive Drehzahlsensoren enthalten eine interne verstärker-/Triggerschaltung, die im Bereich des Nennluftspaltes ein binäres Ausgangssignal generiert, aus dessen Flankenwechseln die Drehzahlinformation abgeleitet wird. Die Auslegung des Luftspaltes muß so vorgenommen werden, daß trotz der dynamischen Veränderungen des Luftspaltes das vorverstärkte Signal des MR- oder Hall-Elementes stets die interne Hystereseschwelle überschreitet, da sonst das Raddrehzahlsignal abreißt, eine Situation, die unbedingt vermieden werden muß. Das erfordert eine ausreichende Luftspaltreserve. Diese Auslegungsvorgabe war bislang nicht immer zu erfüllen. Mit Anwendung der vorliegenden Erfindung gelingt dies nun wesentlich einfacher. Die Erfindung hat den Effekt, daß sich die Luftspaltreserve mit dem dynamischen Fahrzustand erweitert und daß sie gleichzeitig kontrolliert werden kann, mit dem zusätzlichen Vorteil der Auflösung einer unbegrenzt niedrigen Drehzahl.

Weitere Einzelheiten der Erfindung gehen aus der folgenden Darstellung anhand der beigefügten Figuren hervor.

Es zeigen:
- Fig. 1: in schematischer Darstellung die wichtigsten Komponenten einer Anordnung der erfindungsgemäßen Art,
- Fig. 2: ein Flußdiagramm zur Erläuterung der Arbeitsweise der Erfindung,
- Fig. 3: im Diagramm den Verlauf verschiedener Größen in Abhängigkeit vom Luftspalt und
- Fig. 4: ein Flußdiagramm ähnlich Fig. 2 zur Erläuterung der Funktionsweise einer weiteren Ausführungsart der Erfindung.

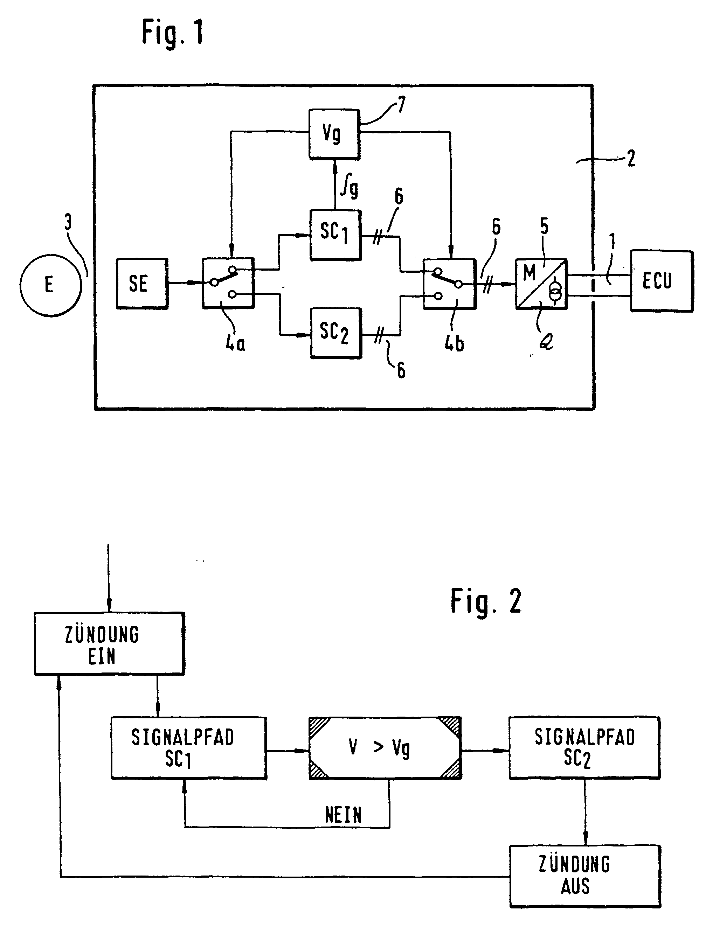

In Fig. 1 ist eine erfindungsgemäße Anordnung zur Erfassung der Drehzahl eines inkrementalen Impulsgebers E (Encoders) mit Hilfe eines Sensormoduls 2, das mit dem Encoder magnetisch über einen Luftspalt 3 gekoppelt ist, wiedergegeben. Das Sensormodul 2 ist mit dem elektronischen Steuergerät ECU eines Regelungssystems, z.B. eines Antiblockiersystems (ABS), über eine Zweidrahtleitung 1 verbunden, über die sowohl die Energieversorgung als auch der Signalaustausch erfolgt. Ein magnetisch empfindliches Sensorelement SE verändert sein Ausgangssignal im Takt der Inkrementalspur des Encoders. Das Ausgangssignal des Sensorelementes SE wird erfindungsgemäß je nach Synchronstellung der Umschalter 4a, 4b, kontrolliert durch einen bestimmten Steuerablauf eines Steuernetzwerkes 7, wechselweise über eine von zwei Signalaufbereitungsschaltungen oder -netzwerke SC₁ oder SC₂ ge führt. Es gelangt auf ein Netzwerk , das als wesentlichen Bestandteil einen Modulator 5 mit einer steuerbaren Stromquelle Q enthält. Im Modulator 5 werden das aufbereitete SE-Signal und ein zusätzliches Statussignal 6 über die Luftspaltreserve überlagert und als Steuersignal für die Stromquelle Q benutzt, was bewirkt, daß in einer Zweidrahtleitung 1 ein eingeprägter Strom im Takt des Steuersignales zwischen unterschiedlichen Stromstärken wechselt.

Der Signalpfad des Signalaufbereitungsnetzwerkes SC1 enthält im vorliegenden Ausführungsbeispiel einen gleichstromgekoppelten Verstärker mit festeingestellter Verstärkung ohne Kompensation des Signalgleichstromanteils, so daß eine unbegrenzt niedrige Drehzahl (v = 0) aufgelöst werden kann. Die Verstärkung ist so fixiert, daß sich ein Grenzluftspalt 3 von L_{G1} = 60 % bis 75 % eines maximalen Grenzluftspalts L_{G2} zwischen dem Sensorelement SE und dem Encoder E erreichen läßt, bevor das Signal abreißt.

Der Signalpfad des Signalaufbereitungsnetzwerkes SC₂ nach Fig. 1 enthält dagegen einen gleichstromgekoppelten Verstärker mit Kompensation durch Gegenkopplung des Signalgleichstromanteils, der fortlaufend über eine Schaltung mit Tiefpaßfunktion niedriger Grenzfrequenz gemessen wird, so daß nur eine nach unten begrenzte Drehzahl aufgelöst wird. Die Verstärkung dieses Signalpfades ist nicht fixiert, sondern verändert sich mit zunehmender/abnehmender Kompensationswirkung mit der Tiefpaßzeitkonstanten nacheilend bis zum eingeschwungenen Zustand einer maximalen Grenzverstärkung, die zugleich einem maximalen Grenzluftspalt L_{G2} entspricht. Die Höhe der maximalen Verstärkung orientiert sich beispielsweise an der erreichbaren Kompensationsgüte bzw. der Robustheit des durch den Encoder erzeugten Nutzsignales gegenüber sensorischen Störeinflüssen.

Die erfindungsgemäße Anordnung arbeitet nach einem Algorithmus, der als Flußdiagramm in Fig. 2 dargestellt ist. Zur Erläuterung der Vorgänge dient Fig. 2 in Verbindung mit Fig. 1. Mit dem Einschalten der Zündung eines Fahrzeugmotors und dem damit verbundenen Start der Energieversorgung schaltet das Steuernetzwerk 7 automatisch über elektronische Selektionsschalter 4a, 4b (Fig. 1) den Signalpfad des Signalaufbereitungsnetzwerkes SC₁ zwischen das Sensorelement SE und den Modulator 5. Von dem Steuernetzwerk 7 wird fortlaufend die augenblickliche Encoderdrehzahl bzw. Fahrgeschwindigkeit V am Signalpfad des SC1 gemessen und mit einem internen Kennwert, der einer bestimmten Grenzdrehzahl bzw. Grenzgeschwindigkeit Vg entspricht, auf V > Vg abgeprüft. Bei Überschreiten der Grenzgeschwindigkeit Vg schaltet das Steuernetzwerk 7 automatisch über die elektronischen Selektionsschalter 4a, 4b den Signalpfad des SC₂ zwischen das Sensorelement SE und den Modulator 5. Dieser Betriebsmodus endet mit dem Ausschalten der Zündung (ZÜNDUNG AUS nach Fig.2).

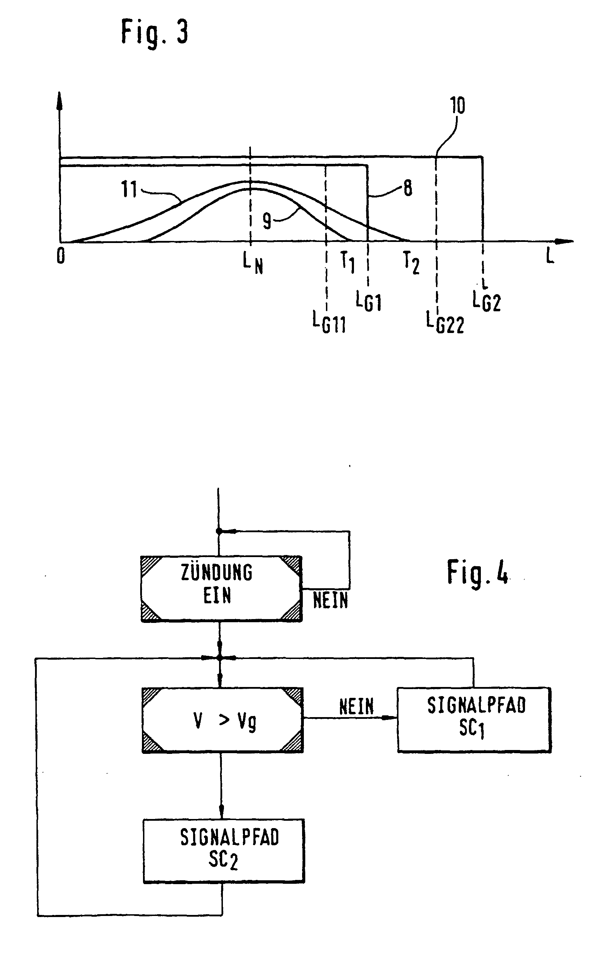

In Fig. 3 ist die Arbeits- oder Wirkungsweise der Erfindung anhand eines nicht maßstäblichen Diagramms dargestellt. Die Abszisse L entspricht dem Luftspalt 3 (Fig. 1), die Ordinate ist unterschiedlichen Größen zugeordnet. Der Kurvenverlauf 8 symbolisiert den konstanten Verlauf der Signalamplitude an der Zweidrahtleitung 1 in Abhängigkeit vom Luftspalt 3 bei Zwischenschaltung des Signalaufbereitungsnetzwerkes SC1. Bei Überschreitung eines Grenzluftspaltes L_{G1} reißt das Signal ab. Zugehörig hierzu ist die statistische Verteilungskurve 9 der erwartbaren Luftspalte mit Toleranz um den Nennluftspalt Ln ohne Berücksichtigung dynamischer Verformungen. Der Punkt T₁ markiert den oberen statistischen Grenzwert, der sich in nerhalb L_{G1} befindet und damit zulässig ist. Die statistische Verteilungskurve 11 mit dem Grenzwert T₂ überschreitet LG1 und wäre ohne den Übergang auf den Modus des Signalaufbereitungsnetzwerkes SC₂ nicht zulässig. Der Kurvenverlauf 10 zeigt den konstanten Verlauf der Signalamplitude an der Zweidrahtleitung 1 für den Modus des Signalaufbereitungsnetzwerkes SC₂ mit dem wesentlich erweiterten Grenzluftspalt L_{G2}, der nun von dem Grenzwert T₂ nicht mehr erreicht wird und deshalb zulässig ist.

In einem Anwendungsbeispiel wird die Grenzgeschwindigkeit Vg zum Übergang von SC₁ auf SC₂ auf eine ca. 10 km/h entsprechende Encoderfrequenz eingestellt. Unterhalb 10 km/h sind bei Fahrmanövern keine dynamischen Verformungen zu erwarten, so daß der Grenzluftspalt L_{G1} ausreichend ist. Da über SC₁ stets aus der Geschwindigkeit Null heraus aufgelöst werden kann, bleiben alle Vorteile erhalten. Wenn die Fahrgeschwindigkeit sich erhöht, vergrößert sich automatisch die Luftspaltreserve.

Die in Fig. 3 dargestellten Grenzluftspalte L_{G1} und L_{G2} sind elektronisch durch einen Signalspannungsschwellwert gekennzeichnet, der dem Durchschalten einer ersten Hystereseschaltung gerade genügt. In einem Anwendungsbeispiel der Erfindung ist eine zweite Hystereseauswertung vorhanden, die einen größeren Signalpegel (z.B. den doppelten Wert) zum Durchschalten erfordert. Diese zweite Hysterese bildet sich in Fig. 3 als Prüfluftspalt L_{G11} für den Modus SC₁ und L_{G22} für den Modus SC₂ ab. Die Luftspaltdifferenzen (L_{G1} - L_{G11}) und (L_{G2} -L_{G22}) werden hier als prüfbare Luftspaltreserve bezeichnet. Durch eine einfache logische Auswertung wird erkannt, ob eine große oder kleine Luftspaltreserve vorhanden ist. Bei einer großen Luftspaltreserve wird das Signal beide, dem jeweiligen Betriebsmodus zugehörigen Hystereseschwellen übertreffen.

Die Kontrolle der Luftspaltreserve im Modus des Signalaufbereitungsnetzwerkes SC₁ kann erfindungsgemäß zur Einbaukontrolle der Sensoren bei der Fertigung oder in der Werkstatt ausgewertet werden. Im Modus des Signalaufbereitungsnetzwerkes SC₁ dient das Signal als zusätzliche sensorische Information über das Erreichen eines dynamischen Grenzzustandes und kann zur Beeinflussung des Regelverhaltens einer elektronischen Bremse oder anderer Aggregate eingesetzt werden.

Eine weitere Nutzung der Anordnung nach Fig. 1 ist in dem Flußdiagramm nach Fig. 4 dargestellt. Nach dem Zündstart wechselt der Signalpfad zwischen SC₁ und SC₂ in Abhängigkeit von der Fahrgeschwindigkeit. Die Umschaltung (V > Vg) ist mit einer ausreichenden Hysterese behaftet, um ein Flattern zwischen den Signalpfaden zu vermeiden.

In weiteren Ausführungsformen der Erfindung sind das Sensorelement SE und die Signalpfade des Signalaufbereitungsnetzwerke SC₁, SC₂ so ausgebildet, daß neben der Drehzahl auch die Drehrichtung erkannt wird.

Es ist vorgesehen, den Erfindungsgedanken in Verbindung mit Anordnungen zu nutzen, die es der ECU erlauben, über die Zeitdrahtleitung 1 Steuersignale an das Sensormodul 2 zu senden. Hierbei soll entweder der Schwellwert Vg durch Befehle der ECU verändert werden können, und/oder es sollen dem Steuernetzwerk 7 Befehle überlagert werden, die ein willkürliches Wechseln zwischen den Signalpfaden der Signalaufbereitungsnetzwerke SC₁, SC₂ bewirken.

## Patentansprüche

1. Anordnung zur Drehzahlerfassung eines Rades oder eines anderen rotierenden Körpers, mit einem Sensorelement (SE) und einer steuerbaren Stromquelle (Q), die ein das Drehverhalten darstellendes Stromsignal liefert, mit einer Signalaufbereitungsschaltung und einem Modulator, der derart ausgebildet ist, daß als Ausgangssignal ein Stromsignal erzeugt wird, **dadurch gekennzeichnet, daß** zumindest das Sensorelement (SE), die steuerbare Stromquelle (Q) und ein Teil der Signalaufbereitungsschaltung sowie der Modulator (5) zu einem Sensormodul (2) zusammengefaßt sind, daß der Modulator (2) in Abhängigkeit von den Signalen des Sensorelementes (SE) die Stromquelle (Q) steuert und daß die Signalaufbereitungsschaltung mindestens zwei Signalaufbereitungsnetzwerke (SC₁,SC₂) enthält, die über ein Steuernetzwerk (7) in Abhängigkeit von vorgegebenen Kriterien und/oder Bedingungen zwischen das Sensorelement (SE) und den Modulator (5) geschaltet werden und die Signalaufbereitung übernehmen,
wobei das Steuernetzwerk (7) das Steuersignal zum Wechsel von einem zum anderen Signalaufbereitungsnetzwerk (SC₁,SC₂) ausschließlich aus einem der Signalaufbereitungsnetzwerke (SC₁,SC₂) ableitet, wobei als Kriterium zum Netzwerkwechsel das Überschreiten eines vorgegebenen Frequenzgrenzwertes oder eines vorgegebenen Wertes der zu messenden Drehzahl ausgewertet wird, sowie weiter **gekennzeichnet dadurch, daß** der Signalpfad eines ersten Signalaufbereitungsnetzwerkes (SC₁ oder SC₂) einen gleichstromgekoppelten Verstärker mit fest eingestellter Verstärkung enthält und daß der Signalpfad eines zweiten Signalaufbereitungsnetzwerkes einen gleichstromgekoppelten Verstärker mit veränderlicher Verstärkung sowie mit Kompensation des Signalgleichstromanteils am Verstärkereingang aufweist, wobei diese Kompensation über ein Netzwerk mit Tiefpaßverhalten erfolgt und wobei der Maximalwert der veränderlichen Verstärkung um ein Vielfaches höher ist als die fest eingestellte Verstärkung des ersten Signalpfades.

2. Anordnung nach Anspruch 1, für ein Kraftfahrzeug mit Verbrennungsmotor, **dadurch gekennzeichnet, daß** nach dem Einschalten der Zündung des Antriebsmotors das Steuernetzwerk (7) selbsttätig zuerst ein erstes Signalaufbereitungsnetzwerk zwischen Sensorelement (SE) und Modulator (5) einschaltet und daß nach dem Überschreiten einer vorgegebenen Drehzahl von z.B. 10 km/h ein Wechsel auf ein zweites Signalaufbereitungsnetzwerk erfolgt, das dann bis zur Ausschaltung der Zündung des Antriebsmotors die Signalaufbereitung bestimmt.

3. Anordnung nach Anspruch 1 oder 2, für ein Kraftfahrzeug mit Verbrennungsmotor, **dadurch gekennzeichnet, daß** nach dem Einschalten der Zündung des Antriebsmotors das Steuernetzwerk (7) selbsttätig zuerst ein erstes Signalaufbereitungsnetzwerk zwischen dem Sensorelement (SE) und dem Modulator (5) einschaltet und nach dem Überschreiten einer vorgegebenen Drehzahl auf ein zweites Signalaufbereitungsnetzwerk um- . schaltet, wobei beim Unterschreiten einer weiteren vorgegebenen Drehzahl wiederum das erste Signalaufbereitungsnetzwerk eingeschaltet und dieser Wechsel drehzahlabhängig weitergeführt wird, bis die Zündung des Antriebsmotors ausgeschaltet wird.

4. Anordnung nach einem oder mehreren der Ansprüche 1 bis 3, **dadurch gekennzeichnet, daß** die Auswertung der Amplitude der vorverstärkten Signalspannung des Sensorelementes (SE) in den Signalpfaden der Signalaufbereitungsnetzwerke (SC₁,SC₂) über jeweils zwei unterschiedliche Hystereseschwellen vorgenommen wird, wobei bei eingefügtem ersten Signalaufbereitungsnetzwerk das gleichzeitige Überschreiten beider Hystereseschwellen als Gütekriterium für einen korrekten Sensoreinbau bei der Fertigung oder Wartung ausgewertet wird und wobei das Unterschreiten einer Hystereseschwelle bei eingefügtem zweiten Signalaufbereitungsnetzwerk als zusätzliche, von dem Sensor abgeleitete Information zur Kennzeichnung des Erreichens eines dynamischen und/oder thermisch bedingten Grenzzustandes, mit dem die Regelung eines elektronischen Bremsensystems oder anderer elektronisch beeinflußbarer Aggregate, z.B. einer Motorsteuerung, verändert werden kann, ausgewertet wird.

## Claims

1. Arrangement for detecting the rotational speed of a wheel or any other rotating member, which includes a sensor element (SE) and a controllable current source (Q) that delivers a current signal representative of the rotational behaviour, a signal-conditioning circuit and a modulator which is configured so that a current signal is produced as an output signal,
**characterized in that** at least the sensor element (SE), the controllable current source (Q) and a part of the signal-conditioning circuit and the modulator (5) are integrated in a sensor module (2), **in that** the modulator (5) controls the current source (Q) in response to the signals of the sensor element (SE), and **in that** the signal-conditioning circuit has at least two signal-conditioning networks (SC₁, SC₂) which, by way of a control network (7), in dependence on predetermined criteria and/or conditions, are connected between the sensor element (SE) and the modulator (5) and take care of signal conditioning, wherein the control network (7) derives the control signal for shift from one to the other signal-conditioning network (SC₁, SC₂) exclusively from one of the signal-conditioning networks (SC₁, SC₂), and the exceeding of a predetermined frequency limit value or a predetermined value of the rotational speed being measured is assessed as a criterion for the network shift, as well as further **characterized in that** the signal path of a first signal-conditioning network (SC₁ or SC₂) includes a DC coupled amplifier with an invariably set amplification, and **in that** the signal path of a second signal-conditioning network includes a DC coupled amplifier with a variable amplification and with a compensation of the signal direct-current portion at the amplifier input, and this compensation takes place by way of a network with a low-pass filter behaviour, and the maximum value of the variable amplification is many times higher than the invariably set amplification of the first signal path.

2. Arrangement as claimed in claim 1, intended for use on an automotive vehicle with an internal combustion engine,
**characterized in that** after the ignition of the vehicle engine is switched on, the control network (7) automatically activates initially a first signal-conditioning network between the sensor element (SE) and the modulator (5), and **in that** after a predetermined rotational speed of e.g. 10 km/h is exceeded there will be a shift to a second signal-conditioning network which then determines signal conditioning until the ignition of the vehicle engine is switched off.

3. Arrangement as claimed in claim 1 or 2, intended for use on an automotive vehicle with an internal combustion engine,
**characterized in that** after the ignition of the vehicle engine is switched on, the control network (7) automatically activates initially a first signal-conditioning network between the sensor element (SE) and the modulator (5) and switches over to a second signal-conditioning network after a predetermined rotational speed is exceeded, and when the rotational speed falls under another predetermined value, the first signal-conditioning network is switched on again and this shift is continued as a function of the rotational speed until the ignition of the vehicle engine is switched off.

4. Arrangement as claimed in any one or more of claims 1 to 3,
**characterized in that** the evaluation of the amplitude of the pre-amplified signal voltage of the sensor element (SE) in the signal paths of the signal-conditioning networks (SC₁, SC₂) is performed by way of two different hysteresis thresholds, and when the first signal-conditioning network is enabled, the simultaneous exceeding of both hysteresis thresholds is assessed as a quality criterion for a correct sensor installation during manufacture or maintenance, and when values remain under a hysteresis threshold, with the second signal-conditioning network enabled, this condition is evaluated as an additional information, derived by the sensor, for characterizing the reaching of a dynamic and/or thermally induced limit condition, permitting variation of the control of an electronic brake system or other electronically influenceable aggregates, such as an engine control.

## Revendications

1. Dispositif de détection de la vitesse de rotation d'une roue ou d'un autre corps tournant, comportant un élément de détection (SE) et une source de courant (Q) commandable qui fournit un signal électrique représentant le comportement en rotation, comportant un circuit de traitement des signaux et un modulateur qui est conçu de manière que soit généré comme signal de sortie un signal le courant, **caractérisé en ce qu'**au moins l'élément de détection (SE), la source de courant (Q) commandable et une partie du circuit de traitement des signaux ainsi que le modulateur (5) sont réunis en un module de détection (2), **en ce que** le modulateur (2) commande la source de courant (Q) en fonction des signaux de l'élément de détection (SE) et **en ce que** le circuit de traitement des signaux contient au moins deux réseaux (SC₁, SC₂) de traitement des signaux, lesquels sont couplés, par un réseau de commande (7), en fonction de critères prédéfinis et/ou de conditions, entre l'élément de détection (SE) et le modulateur (5) et assurent le traitement des signaux,
le réseau de commande (7) dérivant le signal de commande pour le passage d'un réseau de traitement des signaux (SC₁, SC₂) à l'autre, exclusivement de l'un des réseaux de traitement des signaux (SC₁, SC₂), le dépassement d'une valeur limite prédéfinie de la fréquence ou d'une valeur prédéfinie de la vitesse de rotation à mesurer étant exploité comme critère pour le changement de réseau, et **caractérisé en outre en ce que** la voie des signaux d'un premier réseau des traitements de signaux (SC₁ ou SC₂) contient un amplificateur couplé en courant continu avec amplification réglée de manière fixe, et **en ce que** la voie des signaux d'un deuxième réseau de traitement des signaux comporte un amplificateur couplé en courant continu avec amplification variable ainsi qu'avec compensation de la composante de courant continu des signaux à l'entrée de l'amplificateur, cette compensation s'effectuant par l'intermédiaire d'un réseau à comportement passe-bas et la valeur maximale de l'amplification variable étant supérieure d'un multiple à l'amplification réglée de manière fixe de la première voie des signaux.

2. Dispositif selon la revendication 1, pour un véhicule automobile à moteur à combustion interne, **caractérisé en ce qu'**après l'enclenchement de l'allumage du moteur d'entraînement, le réseau de commande (7) enclenche automatiquement d'abord un premier réseau de traitement des signaux entre l'élément de détection (SE) et le modulateur (5), et **en ce qu'**après dépassement d'une vitesse de rotation prédéfinie de 10 km/h par exemple, il se produit un passage à un deuxième réseau de traitement des signaux qui détermine alors le traitement des signaux jusqu'à la coupure de l'allumage du moteur d'entraînement.

3. Dispositif selon la revendication 1 ou 2 pour un véhicule automobile à moteur à combustion interne, **caractérisé en ce qu'**après l'enclenchement de l'allumage du moteur d'entraînement, le réseau de commande (7) enclenche automatiquement d'abord un premier réseau de traitement des signaux entre l'élément de détection (SE) et le modulateur (5), et **en ce qu'**après dépassement d'une vitesse de rotation prédéfinie il commute sur un deuxième réseau de traitement des signaux, le premier réseau de traitement des signaux étant à nouveau enclenché en cas de sous-dépassement d'une autre vitesse de rotation prédéfinie, et ce changement étant poursuivi en fonction de la vitesse de rotation jusqu'à ce que l'allumage du moteur d'entraînement soit coupé.

4. Dispositif selon une ou plusieurs des revendications 1 à 3, **caractérisé en ce que** l'exploitation de l'amplitude de la tension préamplifiée des signaux de l'élément de détection (SE) dans les voies des signaux des réseaux de traitement des signaux (SC₁, SC₂), s'effectue dans chaque cas par deux seuils d'hystérésis différents, le dépassemefit simultané des deux seuils d'hystérésis étant exploité comme critère de qualité pour un montage correct du capteur au stade de la fabrication ou à l'entretien, lorsque le premier réseau de traitement des signaux est inséré, et le sous-dépassement d'un seuil d'hystérésis étant exploité, lorsque le deuxième réseau de traitement des signaux est inséré, comme information supplémentaire, dérivée du capteur, pour caractériser l'obtention d'un état limite dynamique et/ou conditionné thermiquement, par lequel on peut modifier la régulation d'un système électronique de freinage ou d'autres groupes pouvant être influencés électroniquement, par exemple une commande de moteur.
